# FASCICULE DE BREVET EUROPEEN

(11) **EP 2 323 885 B1**
(45) Date de publication et mention de la délivrance du brevet: **10.01.2018**
(21) Numéro de dépôt: 09748407.5
(22) Date de dépôt: 18.09.2009
(51) Int. Cl.: B61D 37/00, A47B 31/06, B60N 3/00

(54) **TABLE DESTINEE A ETRE AGENCEE DANS UN VEHICULE FERROVIAIRE POUR VOYAGEURS**
IN EINEM PASSAGIEREISENBAHNWAGEN ZU ERRICHTENDER TISCH
TABLE TO BE SET UP IN PASSENGER RAILWAY VEHICLE

(30) Priorité: 18.09.2008 FR 0856285
(43) Date de publication de la demande: 25.05.2011
(73) Titulaire: SNCF Mobilités, 93200 Saint-Denis (FR)
(72) Inventeur: MORONVAL, Frédéric, F-49000 Angers (FR)
(74) Mandataire: Cabinet Laurent & Charras
(86) Numéro de dépôt international: PCT/FR2009/051756
(87) Numéro de publication internationale: WO 2010/031971

(56) Documents cités:
- EP-A- 1 514 760
- DE-A1- 3 942 629
- DE-U1- 9 206 638

## Description

### Domaine Technique

L'invention se rapporte au domaine des tables équipant les véhicules ferroviaires pour voyageurs. Elle vise plus particulièrement les tables agencées entre au moins deux sièges se faisant face et qui sont généralement désignées par le terme de "tables vis-à-vis". De telles tables peuvent être de type "simple" lorsqu'elles sont agencées entre deux sièges se faisant face ou de type "double" lorsqu'elles sont agencées entre quatre sièges se faisant face deux à deux.

### Art antérieur

De façon générale, il est connu de réaliser une table vis-à-vis composée de deux tablettes. Chaque tablette présente une portion mobile pivotante par rapport à une portion fixe. Dans ce cas, une fois la portion mobile repliée, elle vient au contact de la portion fixe agencée horizontalement dans le plan défini par la tablette lorsque celle-ci est dépliée. Par conséquent, même en position repliée, ce type de tablette occupe encore un volume important dans le plan de dépliement horizontal de la tablette.

Par conséquent, il peut être difficile pour l'ensemble des usagés du véhicule ferroviaire, lorsque la table est de type double, d'accéder ou de sortir de son siège si celui ci se trouve du côté de la baie vitrée. De même, pour une personne présentant une quelconque gêne dans ses déplacements telle une personne âgée, une personne encombrée de bagages ou encore une personne blessée, cette difficulté est alors accentuée. Il peut également se révéler impossible, pour des personnes voyageant en fauteuil roulant de se transférer sur un siège voyageur agencé en regard de ce type de tablette.

On connaît également des tables vis-à-vis tel que décrit dans le document EP 1 514 760 dans lesquelles les tablettes comportent deux portions mobiles pouvant être repliées sensiblement verticalement et coulissant à l'intérieur d'un logement sensiblement vertical en dessous du plan défini par les tablettes lorsque celles-ci sont dépliées.

Par conséquent, le logement permettant de stocker les tablettes lorsqu'elles sont rangées se situe au niveau des genoux du voyageur et génèrent un volume important, voire gênant pour tout usager nécessitant ou préférant un espace important au niveau des jambes ainsi que pour permettre aux personnes à mobilité réduite de se transférer d'un fauteuil roulant à un siège pour voyageur agencé en regard d'un table vis-à-vis.

Par ailleurs, ce type de dispositif présente un nombre important d'éléments mécaniques, ce qui en fait un dispositif complexe à fabriquer, à assembler et dont la maintenance est très onéreuse.

Ainsi, le but de l'invention est de fournir une solution pour améliorer l'encombrement généré par les tables de type vis-à-vis au niveau des jambes et des genoux.

Un autre objectif est de limiter les efforts permettant de plier ou déplier les tablettes et d'être le plus intuitif possible avec une solution technologique simple à réaliser et à utiliser.

### Exposé de l'invention

L'invention concerne donc une table destinée à être agencée dans un véhicule ferroviaire pour voyageurs et positionnée entre au moins deux sièges se faisant face. Une telle table comporte au moins deux tablettes pliantes, chaque tablette étant agencée en regard d'un siège et comportant une première portion articulée avec une seconde portion au niveau d'une lisière.

Selon l'invention, cette table se caractérise en ce qu'elle comporte un logement fixe agencé au-dessus du plan défini par les tablettes lorsqu'elles sont agencées dans une position dépliée horizontale. Un tel logement fixe est apte à recevoir les tablettes lorsqu'elles sont agencées dans une position repliée verticale dans laquelle la première et la seconde portion sont agencées verticalement l'une contre l'autre, la seconde portion étant articulée avec le logement fixe au niveau d'une lisière opposée à la lisière coopérant avec la première portion de la tablette.

Autrement dit, une fois les tablettes repliées, elles sont positionnées à l'intérieur du logement fixe qui se trouve au-dessus du plan de travail défini par les tablettes, et par conséquent, au-dessus de la zone occupée par les jambes et les genoux du voyageur. Un tel agencement des tablettes permet donc à une personne à mobilité réduite de se transférer de son fauteuil roulant au siège sans être gênée par la table vis-à-vis et à tout à chacun de bénéficier de cet espace libre.

Pour replier les tablettes, on rabat ainsi une première portion articulée au-dessus d'une seconde portion en effectuant un mouvement de pivotement autour d'un axe horizontal. Cette première portion recouvre alors la seconde portion, puis l'ensemble est basculé dans une position verticale à l'intérieur du logement fixe. Ce mouvement de pivotement est réalisé vers le haut et ne nécessite donc pas un effort important de la part du voyageur pour procéder au rangement de la tablette. En effet, un tel effort est inférieur à 20 Newton et peut être réalisé par la paume de la main.de l'usager. Un tel actionnement et déploiement de la tablette est donc aisé et intuitif pour l'usager.

Avantageusement, la table peut comporter un pied central. De cette manière, et notamment lorsque deux sièges sont agencés l'un à côté de l'autre, le siège situé au niveau du couloir présente une grande accessibilité puisque le pied situé au centre de la table ne gêne pas l'accès à cette première place juxtaposée au couloir.

En pratique, la table peut comporter deux montants d'extrémité verticaux. Ainsi, une fois les tablettes repliées, celles-ci sont protégées dans le logement fixe au niveau de leur lisière latérale. De tels montants d'extrémité permettent d'éviter une ouverture accidentelle des tablettes, notamment provoqué par le passage d'un voyageur dans le couloir.

D'autres moyens peuvent également permettre d'éviter le basculement accidentel des tablettes. Pour ce faire, des systèmes mécaniques autobloquant peuvent notamment être insérés dans l'épaisseur des tablettes.

De plus des moyens de freinage peuvent permettre de ralentir l'ouverture des tablettes et évitent ainsi une ouverture brutale et sonore pour garantir le confort des passagers du véhicule.

Selon un mode de réalisation particulier, la table peut comporter une barre d'appui s'étendant sensiblement horizontalement entre les deux montants d'extrémité verticaux. Dans ce cas, le logement fixe permet également de protéger la lisière d'articulation entre les première et seconde portions. Une telle barre d'appui peut également permettre d'aider un usager en fauteuil roulant à se transférer sur le siège ou de se relever. Elle permet également à tout usager de se maintenir et de la guider dans son déplacement. Une telle barre d'appui peut également comporter des sources de lumière permettant d'éclairer les tablettes une fois dépliées.

Avantageusement, la table peut comporter un organe permettant d'effectuer un appel de type SOS. Un tel organe peut notamment permettre d'appeler un agent de train si un incident survient dans le véhicule. En pratique, cet organe peut être agencé dans le logement fixe. En effet, un tel positionnement de l'organe d'appel SOS facilite son raccordement électrique à un faisceau électrique général et permet également de le protéger en évitant ainsi des appels SOS involontairement déclenchés par le voyageur.

### Description sommaire des figures

La manière de réaliser l'invention ainsi que les avantages qui en découlent ressortiront bien du mode de réalisation qui suit, donné à titre indicatif mais non limitatif à l'appui des figures annexées, dans lesquelles :
- la figure 1 est une vue en perspective d'une table conforme à l'invention,
- les figures 2 à 4 représentent des vues en coupe des différentes phases d'ouverture d'une tablette.

### Manière de réaliser l'invention

Comme déjà évoqué, l'invention concerne une table destinée à être agencée dans un véhicule ferroviaire pour voyageurs.

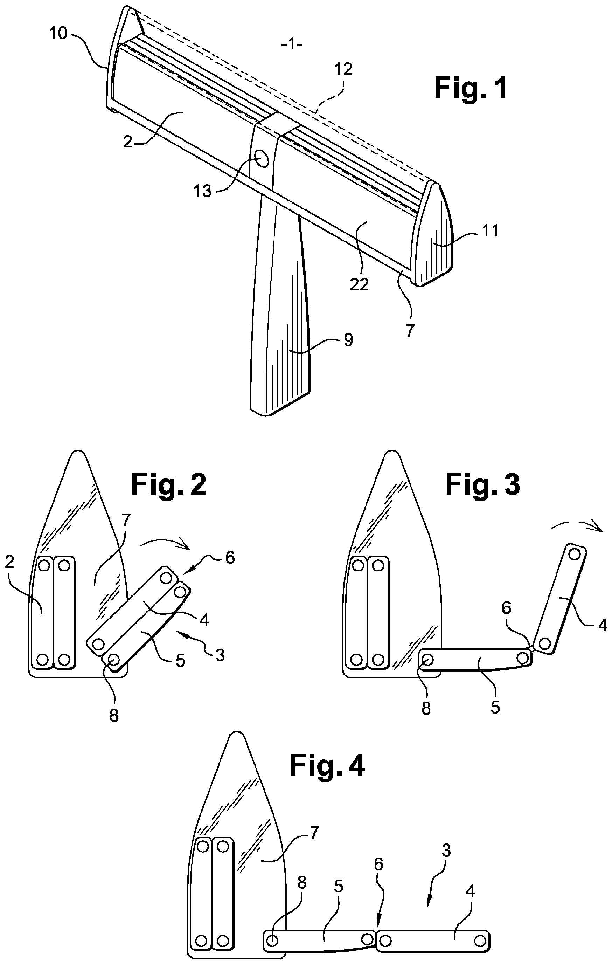

Tel que représenté à la figure 1, la table (1) comporte un logement fixe (7) dans lequel des tablettes (2, 22) peuvent être repliées. Avantageusement, mais non nécessairement, le logement (7) peut être délimité par deux montants d'extrémité verticaux (10, 11) et une barre d'appui (12) qui s'étend entre ces deux montants et recouvre les tablettes (2, 22). Par ailleurs, le logement fixe (7) peut également intégrer un organe (13) permettant d'effectuer un appel SOS, par exemple lorsqu'un incident se produit à l'intérieur d'un véhicule de voyageurs.

Par ailleurs, la table (1) peut comporter un pied central (9) permettant de supporter le logement fixe (7) intégrant les tablettes (2, 12). Un tel pied central (9) se situe donc dans un plan médian vertical de la table.

Tel que représenté à la figure 2, un logement fixe (7) comporte au moins deux tablettes (2, 3) chacune étant agencée en regard d'un siège. Chaque tablette (3) comporte une première portion (4) articulée avec une seconde portion (5) au niveau d'une première lisière (6).

Pour effectuer l'ouverture de la tablette (3), on procède au déplacement des deux portions (4, 5) en faisant pivoter l'ensemble autour d'une lisière opposée (8) à la lisière (6).

Une fois l'ensemble pivoté de 90 degrés, et tel que représenté à la figure 3, on fait pivoter la première portion (4) autour de la lisière (6).

Tel que représenté à la figure 4, la première portion (4) peut pivoter de 180 degrés par rapport à la seconde portion (5) et venir former un plan horizontal sur lequel un voyageur peut disposer ses affaires. Ainsi, tel que représenté, le logement fixe (7) présente un volume dont l'encombrement est majoritairement positionné au-dessus du plan défini par la tablette (3) en position dépliée.

Pour procéder à la fermeture de la tablette (3), on effectue les opérations inverses. Ainsi, on positionne la première portion (4) au contact de la seconde portion (5) en la faisant pivoter autour de la lisière (6). Enfin, on fait pivoter l'ensemble formé par les deux portions (4, 5) autour de la lisière (8) pour les agencer dans une position repliée verticale à l'intérieur du logement (7).

Il ressort de ce qui précède qu'une table conforme à l'invention comporte de nombreux avantages et notamment :
- elle permet de libérer de la place au niveau des genoux et un accès facilité au siège, elle permet ainsi de réaliser un gain de place et donc plus de confort sans changer le pas séparant deux rangées de sièges, c'est-à-dire sans toucher à la capacité du train,
- elle ne nécessite pas d'effort important pour procéder à son ouverture et sa fermeture,
- elle comporte une conception très simple et comporte un nombre limité d'éléments,
- elle permet d'éviter les oublis ou pertes de documents puisque ceux-ci ne peuvent venir se glisser entre deux tablettes,
- le capot supérieur peut permettre à une personne de l'aider à se lever de son siège.

## Revendications

1. Table (1) destinée à être agencée dans un véhicule ferroviaire pour voyageurs, et positionnée entre au moins deux de sièges se faisant face, ladite table (1) comportant au moins deux tablettes pliantes (2, 3,22), chaque tablette (2, 3,22) étant agencée en regard d'un siège et comportant une première portion (4) articulée avec une seconde portion (5) au niveau d'une lisière (6) **caractérisée en ce qu'**elle comporte un logement fixe (7) agencé au dessus du plan défini par les tablettes (2, 3, 22) lorsqu'elles sont agencées dans une position dépliée horizontale, ledit logement fixe (7) étant apte à recevoir les tablettes (2, 3,22) lorsqu'elles sont agencées dans une position repliée verticale dans laquelle la première (4) et la seconde (5) portions sont agencées verticalement l'une contre l'autre, la seconde (5) portion étant articulée avec le logement fixe (7) au niveau d'une lisère opposée (8) à la lisière (6) coopérant avec la première portion (4) de la tablette (2, 3,22).

2. Table selon la revendication 1, **caractérisée en ce qu'**elle comporte un pied central (9).

3. Table selon la revendication 1, **caractérisée en ce qu'**elle comporte deux montants d'extrémité verticaux (10, 11).

4. Table selon la revendication 3, **caractérisée en ce qu'**elle comporte une barre d'appui (12) s'entendant sensiblement horizontalement entre les deux montants d'extrémité verticaux (10, 11).

5. Table selon la revendication 1, **caractérisée en ce qu'**elle compote un organe (13) permettant d'effectuer un appel de type SOS.

6. Table selon la revendication 5, **caractérisée en ce que** ledit organe (13) est agencé dans le logement fixe (7).

## Patentansprüche

1. In einem Passagiereisenbahnwagen zu errichtender Tisch (1), der zwischen mindestens zwei, einander zugewandten Sitzen angeordnet ist, wobei der Tisch (1) mindestens zwei faltbare Platten (2, 3, 22) aufweist, jede Platte (2, 3, 22) dabei so angeordnet ist, dass sie einem Sitz zugewandt ist und ein erstes Teilstück (4) aufweist, das über ein Gelenk an der Kante (6) an einem zweiten Teilstück (5) befestigt ist, **dadurch gekennzeichnet, dass** der Tisch eine feste Unterbringung (7) umfasst, die über der von den Platten (2, 3, 22) definierten Ebene angebracht ist, wenn diese in der horizontalen Position entfaltet sind, wobei diese feste Unterbringung (7) in der Lage ist, die Platten (2, 3, 22) aufzunehmen, wenn sie in die vertikale Position zurückgeklappt sind, in der das erste (4) und das zweite (5) Teilstück vertikal zueinander angeordnet sind, wobei das zweite (5) Teilstück über ein Gelenk an einer Kante (8) an der festen Unterbringung (7) gegenüber der Kante (6) befestigt ist, die mit dem erster Teilstück (4) der Platte (2, 3, 22) zusammenarbeitet.

2. Tisch gemäß Anspruch 1, **dadurch gekennzeichnet, dass** er einen zentralen Fuß (9) enthält.

3. Tisch gemäß Anspruch 1, **dadurch gekennzeichnet, dass** er zwei vertikale Endstücke (10, 11) enthält.

4. Tisch gemäß Anspruch 3, **dadurch gekennzeichnet, dass** er eine Stützstange (12) enthält, die deutlich horizontal zwischen den beiden vertikalen Endstücken (10, 11) verläuft.

5. Tisch gemäß Anspruch 1, **dadurch gekennzeichnet, dass** er eine Vorrichtung (13) enthält, mit der ein Notruf gesendet werden kann.

6. Tisch gemäß Anspruch 5, **dadurch gekennzeichnet, dass** diese Vorrichtung (13) in der festen Unterbringung (7) angeordnet ist.

## Claims

1. Table (1) designed to be set up in a passenger railway vehicle and positioned between at least two seats facing each other, the said table (1) comprising at least two folding trays (2, 3, 22), each tray (2, 3, 22) facing a seat and comprising a first portion (4) hinged to a second portion (5) at an edge (6) **characterised in that** it comprises a fixed housing (7) positioned above the plane defined by the trays (2, 3, 22) when they are in a horizontal unfolded position, the said fixed housing (7) being capable of receiving the trays (2, 3, 22) when they are in a vertical folded back position in which the first (4) and second (5) portion are arranged vertically against each other, the second portion (5) being hinged to the fixed housing (7) at an edge (8) opposite the edge (6) cooperating with the first portion (4) of the tray (2, 3, 22).

2. Table according to claim 1, **characterised in that** it has a central foot (9).

3. Table according to claim 1, **characterised in that** it has two vertical end uprights (10, 11).

4. Table according to claim 3, **characterised in that** it has a supporting bar (12) extending substantially horizontally between the two vertical end uprights (10, 11).

5. Table according to claim 1, **characterised in that** it has a device (13) that enables an SOS call to be made.

6. Table according to claim 5, **characterised in that** the said device (13) is positioned in the fixed housing (7).
